# DEMANDE DE BREVET EUROPEEN

(11) **EP 1 801 948 A1**
(43) Date de publication de la demande: **27.06.2007**
(21) Numéro de dépôt: 06291961.8
(22) Date de dépôt: 18.12.2006
(51) Int. Cl.: H02J 7/00, H02J 1/10

(54) **Système et méthode de connexion entre une première batterie, une deuxième batterie et une charge**

(30) Priorité: 22.12.2005 FR 0513199
(71) Demandeur: SAGEM Défense Sécurité, 75015 Paris (FR)
(72) Inventeur: Nollet, Michel, 78590 Noisy Le Roi (FR)
(74) Mandataire: Lavialle, Bruno François Stéphane

(57) **Abrégé**

L'invention concerne un procédé de gestion de l'alimentation électrique d'un appareil (1) au moyen d'au moins une première batterie (4.1) et une deuxième batterie (4.2), comportant les étapes de: alimenter l'appareil au moyen de la première batterie tant que celle-ci a un niveau de charge suffisant pour alimenter l'appareil ; lorsque la batterie a un niveau de charge insuffisant, alimenter l'appareil au moyen de la deuxième batterie ; alimenter l'appareil avec les deux batteries en parallèle lorsque les niveaux de charge des deux batteries sont sensiblement égaux et insuffisants pour permettre l'alimentation de l'appareil par une seule des batteries.

L'invention a également pour objet un circuit d'alimentation électrique pour la mise en oeuvre de ce procédé et un procédé d'alimentation à froid d'un appareil.

## Description

La présente invention concerne un procédé de gestion de l'alimentation électrique et un circuit d'alimentation électrique d'un appareil. L'invention a également comme objet un procédé d'alimentation à froid d'un appareil.

### ARRIERE PLAN DE L'INVENTION

Il existe des équipements, destinés à être portés par des individus, comprenant un appareil électrique équipé d'une batterie. Pour disposer d'une réserve d'énergie suffisante, la batterie est toutefois relativement lourde et encombrante rendant l'équipement inconfortable et fatiguant en particulier lorsque l'utilisateur est amené à porter longtemps l'équipement ou à faire des efforts avec celui-ci.

Pour obvier à cet inconvénient, il est envisagé d'alimenter l'appareil électrique au moyen d'un circuit d'alimentation séparé comportant deux batteries. L'utilisation de deux batteries séparées de l'appareil est avantageuse car les batteries et l'appareil peuvent être disposés en des endroits différents du corps de l'utilisateur. Le poids de l'équipement est alors réparti sur l'utilisateur, rendant le port de l'équipement plus confortable et moins fatiguant.

Un tel circuit d'alimentation comprend une première batterie et une deuxième batterie qui sont reliées à un organe de connexion externe du circuit par un dispositif de commutation actionnable dans un premier état de connexion et un deuxième état de connexion dans lesquels il relie respectivement la première batterie ou la deuxième batterie à l'organe de connexion externe. Le circuit comprend en outre un organe de gestion qui est agencé pour détecter un niveau de charge des batteries et qui est raccordé au dispositif de commutation pour faire passer le dispositif de commutation du premier état de connexion au deuxième état de connexion lorsque la première batterie a un niveau de charge inférieur à un seuil prédéterminé. Ainsi, la batterie la plus déchargée est utilisée tant que son niveau de charge est suffisant pour alimenter l'équipement. Un utilisateur de l'appareil accédant à un stock de batteries rechargées n'a besoin d'échanger qu'une seule batterie si le commutateur est resté dans son premier état de connexion alors que si les deux batteries avaient été indifféremment utilisées, l'utilisateur aurait dû échanger les deux batteries pour disposer d'une réserve maximale d'énergie. Ceci simplifie la gestion du stock de batteries rechargées et permet de réduire l'importance de ce stock par rapport à celui qui serait nécessaire si l'utilisateur échangeait systématiquement les deux batteries.

L'autonomie procurée par les batteries reste cependant insuffisante pour de longues utilisations de l'équipement en particulier par temps froids où les batteries ont une résistance interne élevée diminuant leurs performances.

### OBJET DE L'INVENTION

Un but de l'invention est de proposer un moyen permettant d'augmenter l'autonomie d'un circuit d'alimentation à plusieurs batteries présentant les avantages ci-dessus énoncés.

### RESUME DE L'INVENTION

A cet effet, on prévoit, selon l'invention, un procédé de gestion de l'alimentation électrique d'un appareil au moyen d'au moins une première batterie et d'une deuxième batterie, comportant les étapes de :
- alimenter l'appareil au moyen de la première batterie tant que celle-ci a un niveau de charge suffisant pour alimenter l'appareil,
- lorsque la batterie a un niveau de charge insuffisant, alimenter l'appareil au moyen de la deuxième batterie,
- alimenter l'appareil avec les deux batteries en parallèle lorsque les niveaux de charge des deux batteries sont sensiblement égaux et insuffisants pour permettre l'alimentation de l'appareil par une seule des batteries.

L'invention a également pour objet un circuit d'alimentation électrique comportant au moins une première batterie et une deuxième batterie qui sont reliées à un organe de connexion externe du circuit par un dispositif de commutation actionnable dans un premier état de connexion et un deuxième état de connexion dans lesquels il relie respectivement la première batterie ou la deuxième batterie à l'organe de connexion externe, le circuit comprenant un organe de gestion qui est agencé pour détecter un niveau de charge des batteries et qui est raccordé au dispositif de commutation pour faire passer le dispositif de commutation du premier état de connexion au deuxième état de connexion lorsque la première batterie a un niveau de charge inférieur à un seuil prédéterminé, caractérisé en ce que le dispositif de commutation possède en outre un troisième état de connexion dans lequel il relie simultanément et en parallèle les deux batteries à l'organe de connexion externe et l'organe de gestion est agencé pour faire passer le dispositif de commutation du deuxième état de connexion au troisième état de connexion lorsque les batteries ont des niveaux de charge sensiblement identiques.

La liaison en parallèle des batteries permet de former un ensemble de batteries ayant une résistance interne globale égale à la moitié de la résistance interne d'une batterie de sorte que la capacité utilisable de l'ensemble de batteries ainsi formé est supérieure à la somme des capacités utilisables restant dans chaque batterie. Le niveau de charge utilisable de l'ensemble de batteries est donc supérieur au seuil prédéterminé et peut être utilisé pour alimenter un appareil électrique.

L'invention a également comme objet un procédé d'alimentation à froid d'un appareil 1 relié à au moins une première batterie et à une deuxième batterie, comprenant les étapes de :
- alimenter l'appareil avec les deux batteries en parallèle dès un démarrage de l'appareil et tant que les niveaux de charge des deux batteries sont sensiblement égaux et insuffisants pour permettre l'alimentation de l'appareil par une seule des batteries, puis
- alimenter l'appareil au moyen de la première batterie tant que celle-ci a un niveau de charge suffisant pour alimenter l'appareil,
- lorsque la première batterie a un niveau de charge insuffisant, alimenter l'appareil au moyen de la deuxième batterie.

D'autres caractéristiques et avantages de l'invention ressortiront à la lecture de la description qui suit d'un mode de mise en oeuvre particulier non limitatif de l'invention.

### BREVE DESCRIPTION DES DESSINS

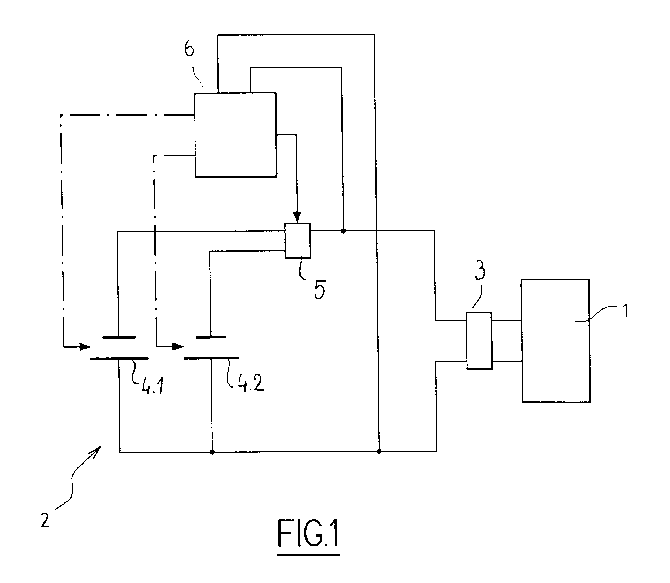

Il sera fait référence à la figure unique annexée représentant schématiquement un équipement comportant un circuit d'alimentation conforme à l'invention.

### DESCRIPTION DETAILLEE DE L'INVENTION

L'équipement comprend un appareil électrique 1 tel qu'un terminal de communication, une unité informatique, un dispositif optoélectronique... et un circuit d'alimentation électrique généralement désigné en 2. L'appareil électrique 1 est relié à un organe de connexion externe 3 du circuit d'alimentation 2. L'organe de connexion externe 3, connu en lui-même, est par exemple un connecteur à broches.

Le circuit d'alimentation 2 comporte une première batterie 4.1 et une deuxième batterie 4.2 qui sont reliées à l'organe de connexion externe 3 par un dispositif de commutation 5. On notera que les batteries sont ici reliées entre elles en parallèle directement par l'organe de commutation.

Les batteries 4.1, 4.2, connues en elles-mêmes, sont ici des batteries Li-ion de type Smart, c'est-à-dire répondant aux spécifications du standard industriel SBS (de l'anglais "Smart Battery Systems", systèmes de batterie intelligentes) incorporant un processeur susceptible de fournir des informations relatives au niveau de charge de la batterie.

Le dispositif de commutation 5 est sélectivement actionnable dans un premier état de connexion dans lequel il connecte la batterie 4.1 à l'organe de connexion externe 3, un deuxième état de connexion dans lequel il connecte la batterie 4.2 à l'organe de connexion externe 3 et un troisième état de connexion dans lequel il connecte simultanément et en parallèle les deux batteries 4.1, 4.2 à l'organe de connexion externe 3.

Le circuit d'alimentation 2 comprend un organe de gestion 6 qui est agencé pour détecter un niveau de charge des batteries 4.1, 4.2 et qui est raccordé au dispositif de commutation 5 pour le commander. L'organe de gestion 6 incorpore ici un processeur susceptible d'exécuter un programme informatique et agencé pour communiquer avec le processeur de chaque batterie 4.1, 4.2 et récupérer le niveau de charge des batteries 4.1, 4.2 auprès du processeur correspondant.

Le procédé de gestion de l'alimentation électrique de l'appareil conformément à l'invention va maintenant être décrit.

Ce procédé débute par l'étape d'alimenter l'appareil 1 au moyen de la batterie 4.1 tant que celle-ci a un niveau de charge suffisant pour alimenter l'appareil 1. L'organe de gestion 6 commande l'organe de commutation 5 dans son premier état de connexion.

Lorsque l'organe de gestion 6 détecte que la batterie 4.1 a un niveau de charge inférieur à un seuil prédéterminé (c'est-à-dire un niveau de charge insuffisant pour alimenter l'appareil 1 sans risquer de détériorer la batterie 4.1), l'organe de gestion 6 actionne l'organe de commutation 5 dans son deuxième état de connexion de manière à alimenter l'appareil 1 par la batterie 4.2.

Lorsque l'organe de gestion 6 détecte que la batterie 4.2 a un niveau de charge inférieur au seuil prédéterminé (le niveau de charge de la batterie 4.2 est alors sensiblement identique au niveau de charge de la batterie 4.1), l'organe de gestion 6 actionne l'organe de commutation 5 dans son troisième état de connexion de manière à relier les batteries 4.1, 4.2 en parallèle à l'organe de connexion externe 3 et donc à l'appareil 1.

On notera que le niveau de charges des batteries 4.1, 4.2 peut n'être insuffisant que de manière temporaire, par exemple lorsque la température des batteries est très basse et redevenir suffisant lorsque la température augmente, l'organe de gestion 6 commande alors le retour de l'organe de commutation 5 dans son premier état de connexion.

Le procédé d'alimentation à froid de l'appareil va maintenant être décrit.

Le procédé d'alimentation comprend les étapes de :
- alimenter l'appareil avec les deux batteries en parallèle dès un démarrage de l'appareil et tant que les niveaux de charge des deux batteries sont sensiblement égaux et insuffisants pour permettre l'alimentation de l'appareil par une seule des batteries 4.2, puis
- alimenter l'appareil au moyen de la première batterie 4.1 tant que celle-ci a un niveau de charge suffisant pour alimenter l'appareil,
- lorsque la première batterie 4.1 a un niveau de charge insuffisant, alimenter l'appareil au moyen de la deuxième batterie 4.2.

Il est possible que l'organe de gestion de l'appareil soit alimenté par une seule des batteries et qu'il commande immédiatement l'organe de commutation 5 pour délivrer la puissance à l'appareil via les deux batteries en parallèle ou d'alimenter l'organe de gestion 6 via les deux batteries en parallèle (l'organe de commutation 5 revenant automatiquement dans son troisième état de connexion à l'extinction de l'appareil ou à sa mise sous tension). Par la suite, dès que l'état de charge de la batterie 4.1 et/ou de la batterie 4.2 le permet, l'organe de gestion 6 commande de façon correspondante l'organe de commutation 5 pour alimenter l'appareil par une seule batterie.

Bien entendu, l'invention n'est pas limitée au mode de mise en oeuvre décrit mais englobe toute variante entrant dans le cadre de l'invention telle que définie par les revendications.

En particulier, l'organe de gestion 6 peut être associé à un compteur de Coulombs ou à un détecteur de tension pour déterminer le niveau de charge des batteries en particulier lorsque les batteries utilisées sont des batteries classiques et non pas des batteries de type Smart. Dans ce dernier cas, lorsque l'organe de gestion est associé à un détecteur de tension, l'organe de gestion compare la tension détectée à un seuil de tension représentatif du niveau de charge minimal pour l'alimentation de l'appareil.

Il peut également être envisagé de commander la mise en parallèle des batteries lorsque la température est inférieure à un seuil prédéterminé. Ainsi, si la température est inférieure au seuil, il est décidé de délivrer la puissance à l'appareil directement par les deux batteries en parallèle. Il est également possible, préalablement à l'alimentation par les deux batteries en parallèle, de vérifier le niveau de charge de chacune des batteries.

Le nombre de batteries peut être supérieur à deux, toutes les batteries, ou seulement certaines d'entre elles, pouvant alors être simultanément reliées en parallèle à l'appareil à alimenter. Qu'il y ait deux ou plus de deux batteries, l'organe de gestion peut commander l'organe de commutation pour alimenter l'appareil par la batterie la plus déchargée tant que le niveau de charge de celle-ci est suffisant et par les deux batteries en parallèle (ou au moins deux batteries, ou plus, si le nombre de batteries est supérieur à deux) lorsque les batteries sont un niveau de charge insuffisant pour alimenter seules l'appareil.

La fonction d'organe de gestion peut en outre être assurée directement par l'appareil et le circuit d'alimentation peut être d'une manière générale incorporé à l'appareil.

Le circuit d'alimentation peut assurer l'alimentation d'un ou de plusieurs appareils.

## Revendications

1. Procédé de gestion de l'alimentation électrique d'un appareil (1) au moyen d'au moins une première batterie (4.1) et une deuxième batterie (4.2), comportant les étapes de :
- alimenter l'appareil au moyen de la première batterie tant que celle-ci a un niveau de charge suffisant pour alimenter l'appareil,
- lorsque la batterie a un niveau de charge insuffisant, alimenter l'appareil au moyen de la deuxième batterie,
- alimenter l'appareil avec les deux batteries en parallèle lorsque les niveaux de charge des deux batteries sont sensiblement égaux et insuffisants pour permettre l'alimentation de l'appareil par une seule des batteries.

2. Procédé d'alimentation à froid d'un appareil (1) relié à au moins une première batterie (4.1) et à une deuxième batterie (4.2), comprenant les étapes de :
- alimenter l'appareil avec les deux batteries en parallèle dès un démarrage de l'appareil et tant que les niveaux de charge des deux batteries sont sensiblement égaux et insuffisants pour permettre l'alimentation de l'appareil par une seule des batteries (4.2), puis
- alimenter l'appareil au moyen de la première batterie (4.1) tant que celle-ci a un niveau de charge suffisant pour alimenter l'appareil,
- lorsque la première batterie (4.1) a un niveau de charge insuffisant, alimenter l'appareil au moyen de la deuxième batterie (4.2).

3. Circuit d'alimentation électrique pour la mise en oeuvre des procédés des revendications 1 et 2, comportant au moins une première batterie (4.1) et une deuxième batterie (4.2) qui sont reliées à un organe de connexion externe (3) du circuit par un dispositif de commutation (5) actionnable dans un premier état de connexion et un deuxième état de connexion dans lesquels il relie respectivement la première batterie ou la deuxième batterie à l'organe de connexion externe, le circuit comprenant un organe de gestion (6) qui est agencé pour détecter un niveau de charge des batteries et qui est raccordé au dispositif de commutation pour faire passer le dispositif de commutation du premier état de connexion au deuxième état de connexion lorsque la première batterie a un niveau de charge inférieur à un seuil prédéterminé, circuit dans lequel le dispositif de commutation possède en outre un troisième état de connexion dans lequel il relie simultanément et en parallèle les deux batteries à l'organe de connexion externe et l'organe de gestion est agencé pour faire passer le dispositif de commutation du deuxième état de connexion au troisième état de connexion lorsque les batteries ont des niveaux de charge sensiblement identiques.
